# EUROPEAN PATENT SPECIFICATION

(11) **EP 4 322 287 B1**
(45) Date of publication and mention of the grant of the patent: **01.04.2026**
(21) Application number: 23792113.5
(22) Date of filing: 14.04.2023
(51) Int. Cl.: H01M 10/6568, H01M 10/6556, H01M 10/613, H01M 50/645, H01M 50/383, H01M 50/30, H01M 50/224, H01M 50/211, H01M 50/209, H01M 10/625, H01M 10/647, H01M 50/505, H01M 50/557, H01M 50/367

(54) **SECONDARY BATTERY**
SEKUNDÄRBATTERIE
BATTERIE SECONDAIRE

(30) Priority: 18.04.2022 KR 20220047720; 27.12.2022 KR 20220185543
(43) Date of publication of application: 14.02.2024
(73) Proprietor: LG Energy Solution, Ltd., Seoul 07335 (KR)
(72) Inventor: LEE, Yong Ho, Daejeon 34122 (KR); KONG, Seung Jin, Daejeon 34122 (KR); LEE, Jin Kyu, Daejeon 34122 (KR)
(74) Representative: Plasseraud IP
(86) International application number: PCT/KR2023/005129
(87) International publication number: WO 2023/204536

(56) References cited:
- JP-A- 2008 258 027
- JP-A- 2008 258 027
- JP-A- 2009 219 257
- JP-A- 2012 252 909
- KR-A- 20120 086 657
- KR-A- 20120 086 657
- KR-A- 20130 078 953
- US-A1- 2020 411 930
- US-A1- 2021 328 304

## Description

### [Technical Field]

The present disclosure relates to a secondary battery capable of suppressing a heat propagation phenomenon that causes other secondary batteries in the vicinity to continuously overheat in the event of a thermal runaway.

### [Background]

Unlike primary batteries, secondary batteries can be recharged, and they have been heavily researched and developed in recent years due to their potential for miniaturization and large capacity. The demand for secondary batteries as an energy source is increasing rapidly due to the technological development and increasing demand for mobile devices, and due to electric vehicles and energy storage systems, which are emerging in response to the need for environmental protection.

Secondary batteries are categorized into coin-type cells, cylindrical cells, prismatic cells, and pouch-type cells based on the shape of the battery case. In a secondary battery, an electrode assembly mounted inside the battery case is a chargeable/dischargeable power generator consisting of a laminated structure of electrodes and separators.

Since secondary batteries are required to be used continuously for a long period of time, it is necessary to effectively control the heat generated during the charging and discharging process. In addition, if the secondary battery is overcharged or an external short circuit occurs and an overcurrent is applied, the increase in current causes the temperature to rise, and the increase in temperature causes the current to increase again, resulting in a feedback chain reaction that eventually leads to the catastrophic condition of thermal runaway.

In addition, if the secondary batteries are grouped together in the form of modules or packs, the thermal propagation phenomenon occurs, in which the thermal runaway of one secondary battery continuously overheats other secondary batteries in the vicinity. Furthermore, there is a high risk of fire due to flammable gases emitted from overheated secondary batteries and due to ignition sources such as heated electrodes, so it is necessary to suppress this ignition risk.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

Documents US 2021/328304 A1, US 2020/411930 A1, JP 2008 258027 A and KR 2012 0086657 A relate to the prevention of propagation of thermal events in secondary batteries.

### [Summary]

### [Technical Problem]

The present disclosure aims to provide a secondary battery that can effectively suppress and prevent the phenomenon of heat propagation due to thermal runaway generated in the secondary battery.

However, the technical problems that the present disclosure seeks to address are not limited to those described above, and other problems not mentioned will be apparent to those of ordinary skill in the art from the following description of the disclosure.

### [Technical Solution]

To solve this problem, the invention provides a secondary battery according to claim 1.

The secondary battery after the invention may present one or more feature(s) of dependent claims 2 to 12, in any combination allowed by the claims.

### [Advantageous Effects]

According to the secondary battery of the present disclosure with the above configuration, the coolant stored inside the housing can quickly absorb and dissipate heat in an environment with high temperature rise such as rapid charging during normal use, thereby suppressing the occurrence of thermal runaway and maintaining performance and lifespan without high temperature rise.

In addition, the present disclosure can suppress heat propagation by the insulating effect of the coolant stored inside the housing when thermal runaway occurs in the secondary battery, as well as greatly reducing the risk of fire by cooling the ignition sources such as flammable gases emitted from the overheated battery cells and heated electrodes as the low-melting point stopper sealing the coolant melts and is emitted as coolant and/or water vapor, thereby suppressing the flame.

Furthermore, by installing a filter that filters out particles exceeding a certain size in the venting hole provided in the secondary battery, the present disclosure can effectively suppress the risk of an external fire caused by an ignition source of high temperature particles.

However, the technical effects of the present disclosure are not limited to those described above, and other effects not mentioned will be apparent to one of ordinary skill in the art from the following description of the disclosure.

### [Brief Description of the Drawings]

The accompanying drawings illustrate exemplary embodiments of the present disclosure and, together with the following detailed description, serve to provide further understanding of the technical spirit of the present disclosure. Therefore, the present disclosure is not to be construed as being limited to the drawings.
FIG. 1 is a perspective view of a secondary battery according to a first embodiment of the present disclosure.
FIG. 2 is an exploded perspective view of the secondary battery in FIG. 1.
FIG. 3 is a detailed diagram of the housing of a secondary battery.
FIG. 4 is a diagram of the structure in which a side adapter is coupled to a housing of a secondary battery.
FIGS. 5 and 6 are diagrams illustrating a state in which a housing with side adapters coupled is filled with coolant and sealed.
FIG. 7 is a diagram illustrating a state in which a side cap and a busbar are coupled to a side of a case.
FIG. 8 is a diagram illustrating a state in which a coolant stored in a housing is emitted to a venting hole with high-temperature gases.
FIG. 9 is an exploded perspective view of a secondary battery according to a second embodiment of the present disclosure.
FIG. 10 is a front view illustrating a mounting structure of a guide body.
FIG. 11 is a cross-sectional view across a venting hole and a guide body.
FIG. 12 is a diagram illustrating a state in which a coolant stored in the housing is induced to be emitted to a venting hole along with high-temperature gases in a second embodiment of the present disclosure.

### [Detailed Description]

While the present disclosure may be variously changed and have various embodiments, specific embodiments will be described in detail below.

In this application, it should be understood that terms such as "include" or "have" are intended to indicate the presence of a feature, number, step, operation, component, part, or a combination thereof described on the specification, and they do not preclude the possibility of the presence or addition of one or more other features or numbers, steps, operations, components, parts or combinations thereof.

In addition, in this application, when a portion such as a layer, a film, an area, a plate, and the like are referred to as being "on" another portion, this includes not only the case where the portion is "directly on" another portion but also the case where still another portion is interposed therebetween. On the other hand, when a portion such as a layer, a film, an area, a plate, and the like are referred to as being "under" another portion, this includes not only the case where the portion is "directly under" another portion but also the case where still another portion is interposed therebetween. In addition, to be disposed "on" in the present application may include the case of being disposed at the bottom as well as the top.

The present disclosure relates to a secondary battery according to claim 1 and including a metal housing; and at least one battery cell housed within the housing; wherein the housing includes a coolant stored in a hollow portion formed between an inner surface facing the battery cell and an outer surface spaced apart with respect to the inner surface. In other words, the present disclosure includes a configuration in which the housing itself stores the coolant.

According to the secondary battery of the present disclosure with the above configuration, the coolant stored inside the housing can quickly absorb and dissipate heat in an environment with high temperature rise such as rapid charging during normal use, thereby suppressing the occurrence of thermal runaway and maintaining performance and lifespan without high temperature rise.

In addition, the present disclosure can suppress heat propagation by the insulating effect of the coolant stored inside the housing when thermal runaway occurs in the secondary battery, as well as greatly reducing the risk of fire by cooling the ignition sources such as flammable gases emitted from the overheated battery cells and heating electrodes as the low-melting point stopper sealing the coolant melts and is emitted as coolant and/or water vapor, thereby suppressing the flame.

### [Mode for Carrying Out the Invention]

Hereinafter, specific embodiments of the present disclosure will be described in detail with reference to the accompanying drawings. In the following description, the directions of front, back, up, down, left, right, and center, which designate relative positions, are intended to aid in the understanding of the invention, and use the directions shown in the drawings unless otherwise specified.

### [First embodiment]

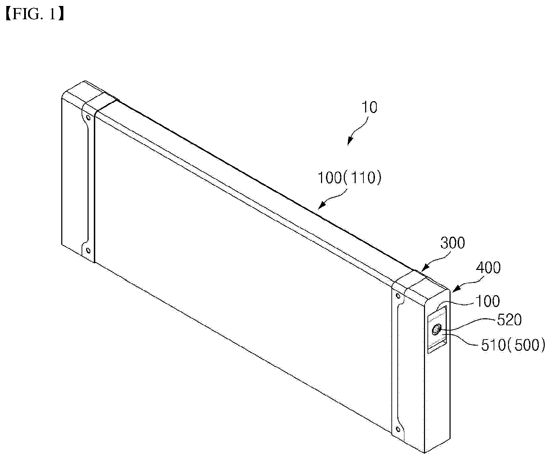

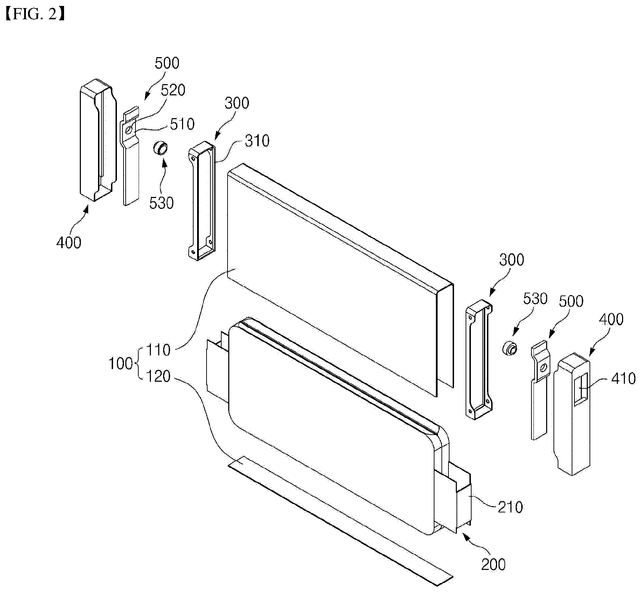

FIG. 1 is a perspective view of a secondary battery 10 according to a first embodiment of the present disclosure, and FIG. 2 is an exploded perspective view of the secondary battery 10 of FIG. 1.

As shown in the accompanying drawings, the secondary battery 10 of the present disclosure includes a housing 100 made of metal, and at least one battery cell 200 housed within the housing 100. As one example, in the illustrated exemplary embodiment, the battery cell 200 is a pouch-type battery cell 200 with bidirectional terminals, and two pouch-type battery cells 200 are housed within the housing 100.

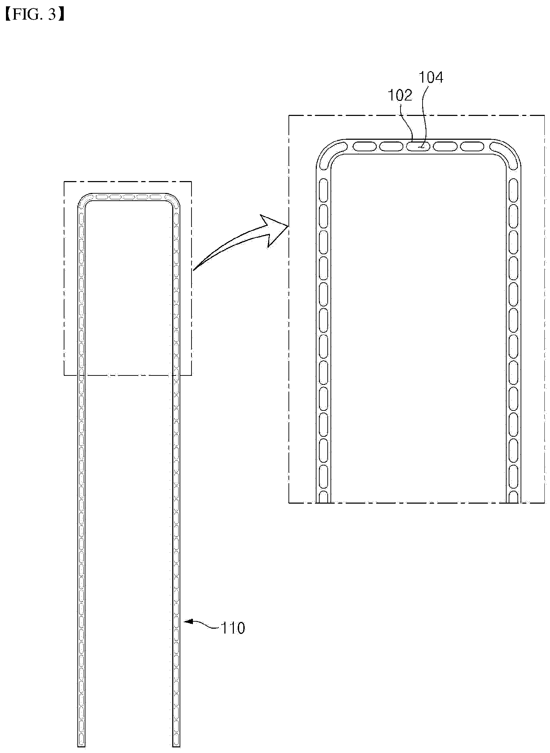

FIG. 3 is a detailed diagram of a housing 100 of the secondary battery 10, wherein the housing 100 has a hollow portion 102 formed between an inner surface facing the battery cell 200 and an outer surface spaced apart with respect to the inner surface, and a coolant is stored in the hollow portion 102 provided in the thickness of the housing 100.

The housing 100 may be integrally formed with the hollow portion 102 by extrusion molding a metal material such as aluminum or stainless steel, or alloys thereof. In the exemplary embodiment shown, the housing 100 consists of a main housing 110 having a cross-sectional shape of a lowercase "n" of the English alphabet and a bottom plate 120 coupled to the opening at the lower part, considering the ease of storage of the battery cell 200, the cost of extrusion molding, etc.

In addition, the hollow portion 102 has an open entrance/exit (e.g., opening) 104 on both sides of the housing 100. This is in consideration of the orientation of the continuous extrusion molding of the main housing 110, and also to ensure that the hollow portion 102 is well supplied with coolant.

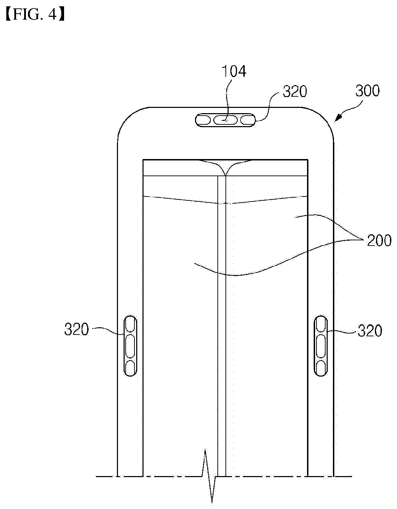

Since the hollow portion 102 of the housing 100 is open on both sides, a separate sealing structure is required to store the coolant. For sealing the coolant, in the present disclosure, side adapters 300 that seal the entrance/exit (e.g., opening)104 of the hollow portion 102 are coupled to both sides of the housing 100 against the outside. FIG. 4 illustrates the structure of the side adapters 300 coupled to the housing 100.

The side adapter 300 has grooves 310 that bind the inner and outer surfaces of the housing 100. The edges of the housing 100 are inserted into the grooves 310 to form a mutual binding, and a solid seal is formed by welding or the like. Furthermore, the entrance/exit (e.g., openings) 104 of the hollow portion 102 disposed in the grooves 310 of the side adapter 300 communicate with each other in the grooves 310. That is, the bottom surfaces of the grooves 310 are spaced apart to form a space with respect to the entrance/exit (e.g., openings) 104 of the hollow portion 102, and accordingly, the side adapter 300 may allow the coolant to mutually flow within the grooves 310 while sealing the coolant in the hollow portion 102 from leaking to the outside.

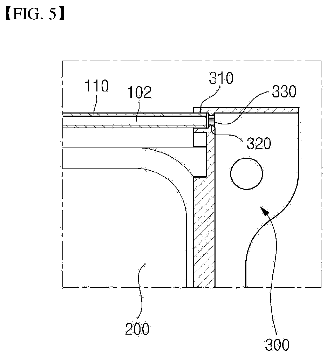

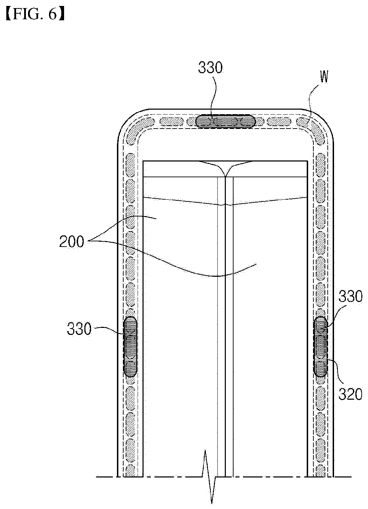

Furthermore, the side adapter 300 has a spigot hole 320 exposing a part of the entrance/exit (e.g., openings) 104 of the hollow portion 102 to allow spigot from the outside, and the spigot hole 320 is sealed by a stopper 330. FIGS. 5 and 6 are diagrams illustrating a state in which a housing 100 with side adapters 300 coupled is filled with coolant W and sealed. FIG. 5 shows a side cross-sectional view, and FIG. 6 shows a state in which the spigot hole 320 is sealed by the stopper 330.

The spigot hole 320 is formed as a structure that penetrates the bottom surface of the groove 310. Inside the groove 310, the entrance/exit (e.g., openings) 104 of the hollow portion 102 are interconnected, so that the coolant W is injected into all of the hollow portions 102, even if the coolant W is injected into the locally open spigot hole 320. When the injection of the coolant W is completed, the spigot hole 320 is sealed with a stopper 330 to complete the seal. Here, in consideration of deflation and the like, it may be advantageous to place the spigot hole 320 in the upper part of the housing 100 to facilitate the injection of the coolant W.

In addition, the stopper 330 is made of a material that has a relatively low melting point compared to the housing 100. The stopper 330 may be made of a variety of materials, such as metal, non-metal, synthetic resin, rubber, and the like. It is also possible to manufacture a separate stopper 330 and couple it to the spigot hole 320, as well as to close the spigot hole 320 by techniques such as brazing or soldering.

The secondary battery 10 of the present disclosure contributes to suppressing the occurrence of thermal runaway and maintaining performance and lifespan by allowing the coolant W stored in the housing 100 to quickly absorb and dissipate heat in an environment with a high temperature rise, such as during normal rapid charging.

In addition, in the event of a thermal runaway phenomenon in the secondary battery 10, the present disclosure can suppress heat propagation to the surroundings by the insulating effect of the coolant W stored inside the housing 100, as well as greatly reducing the risk of fire by cooling the ignition sources such as flammable gases emitted from the overheated battery cell 200 and heated electrodes as the low-melting point stopper 330 sealing the coolant melts and is emitted as coolant and/or water vapor, thereby suppressing the flame.

In other words, in the present disclosure, the coolant stored in the housing 100 greatly improves the safety of the secondary battery 10 by performing various functions ranging from insulation, heat absorption, heat dissipation, cooling, and fire extinguishing.

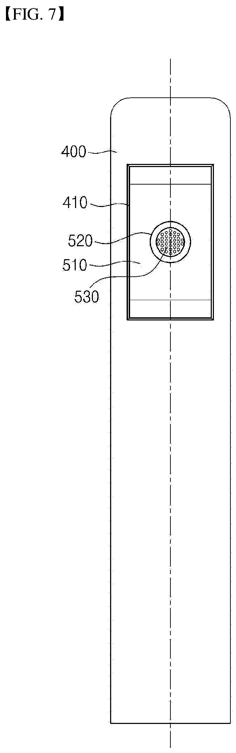

Additionally, the secondary battery 10 of the present disclosure may include a side cap 400 that couples to the side adapter 300 and forms an interior space in which the electrode lead 210 of the battery cell 200 is located, and a busbar 500 disposed on the interior of the side cap 400 and electrically connected to the electrode leads 210 of the battery cell 200. Here, a part of the busbar 500 exposed through an incision 410 provided in the side cap 400 may form an electrode terminal 510. FIG. 7 is a diagram illustrating a state in which a side cap and a busbar are coupled to a side of a housing.

The location of the incision 410 may be disposed generally above the center of the height of the secondary battery 10, that is, at the upper part of the secondary battery 10. This is to allow for the convenience of electrical connections to the busbar 500 exposed by the incision 410, while also being a suitable location to allow water vapor vaporized by the coolant W stored inside the housing 100 to be emitted from the secondary battery 10.

Furthermore, according to an exemplary embodiment of the present disclosure, the busbar 500 may be provided with a venting hole 520 formed on the electrode terminal 510. Accordingly, when the battery cell 200 overheats and melts the stopper 330 blocking the spigot hole 320, coolant and/or water vapor stored in the hollow portion 102 of the housing 100 passes through the spigot hole 320 to cool the high-temperature gases generated by the battery cell 200 and the ignition source such as the heated electrode, and is then discharged into the venting hole 520.

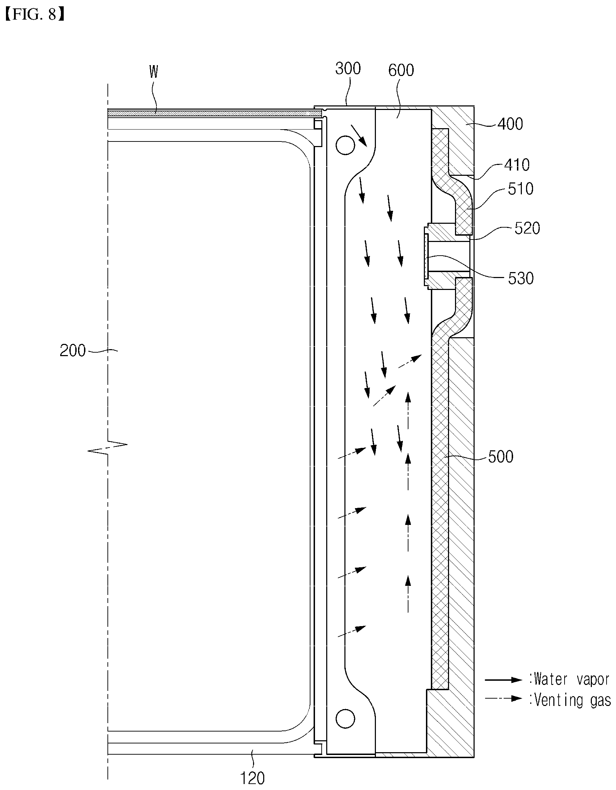

FIG. 8 is a diagram illustrating a state in which a coolant W stored in a housing 100 is discharged into a venting hole 520 with high-temperature gases (venting gas). The stopper 330, which was blocking the spigot hole 320 disposed on the upper part of the housing 100, is melted and disappeared by the heat of the overheated battery cell 200, so that water vapor is discharged from the spigot hole 320 and venting gas is discharged from the overheated battery cell 200.

In the case of the pouch-type battery cell 200, the area where the seal is relatively weak is the part where the electrode leads 210 protrude out, and referring to FIG. 2, the electrode leads 210 are located on the lower side of the battery cell 200 relative to the spigot hole 320. Accordingly, the water vapor discharged from the upper side of the housing 100 and the venting gas discharged from the lower side of the battery cell 200 collide in the middle, causing mutual heat exchange, and the temperature of the venting gas drops, and the water vapor and the venting gas with the adjusted temperature are discharged to the outside through the venting hole 520. In this way, the internal pressure of the housing 100 is relieved by proper ventilation through the venting hole 520, and the structural collapse of the secondary battery 10 is prevented.

In addition, depending on the exemplary embodiment, the venting hole 520 may be equipped with a filter 530 that filters out particles exceeding a certain size. The filter 530 may effectively suppress the risk of an external fire that may be caused by an ignition source of hot particles from the overheated battery cell 200 escaping to the outside.

### [Second embodiment]

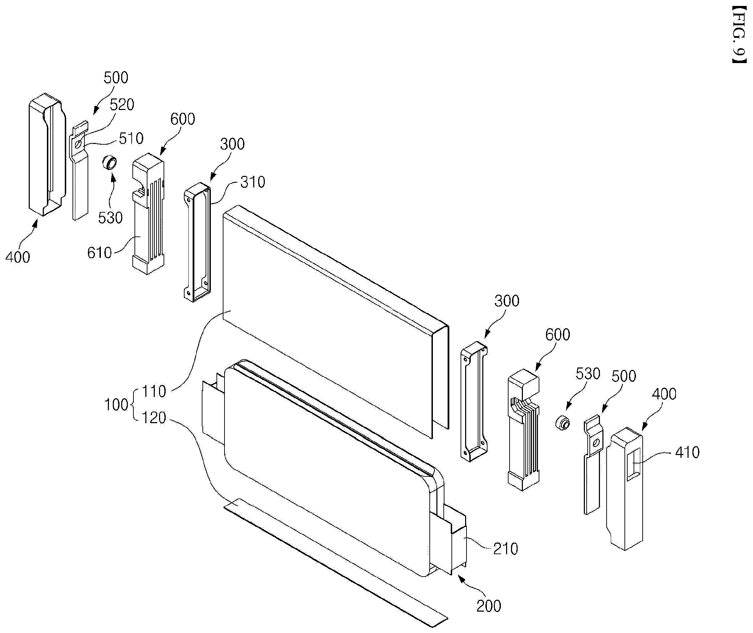

FIG. 9 is an exploded perspective view of a secondary battery 10 according to a second embodiment of the present disclosure, wherein the second embodiment of the present disclosure further includes a guide body 600 disposed to face the busbar 500 on the interior of the side cap 400. The guide body 600 serves to direct the flow of gases generated by the battery cell 200 and coolant and/or water vapor discharged through the spigot hole 320 to the venting hole 520.

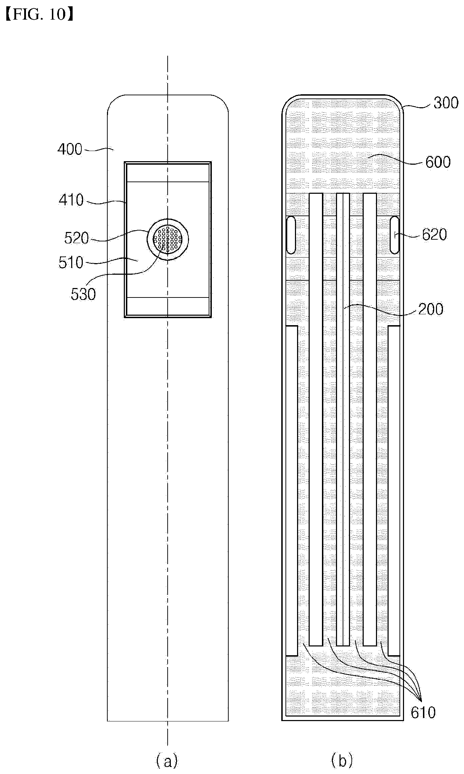

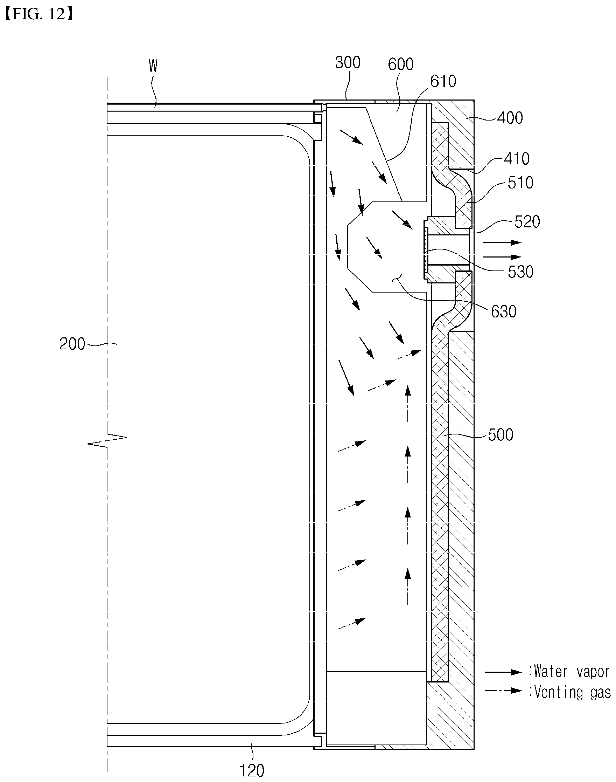

FIG. 10 is a front view illustrating the mounting structure of the guide body 600, wherein a state in which the side cap 400 shown in FIG. 10(a) and the busbar 500 therein are removed is shown in FIG. 10(b). In the embodiment shown, the guide body 600 has a plurality of guide plates 610, whereby the flow of gas generated by the battery cell 200 and coolant and/or water vapor discharged through the spigot hole 320 is divided into a plurality of branches, as shown in FIG. 12. By splitting the flow of gas and coolant into a plurality of branches, the flow is smoother with more even cooling, and the contact area of the gas and coolant is increased, thereby improving the overall cooling efficiency.

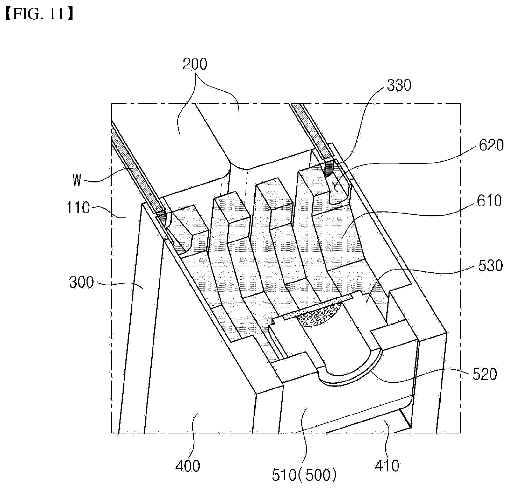

In addition, FIG. 11 is a cross-sectional view cut across the venting hole 520 and the guide body 600, wherein the guide body 600 is closely disposed against the inner surface of the side adapter 300, so that the flow of gas and coolant flows directly into the guide body 600 without scattering. Here, so that the guide body 600 is provided with a through hole 620 corresponding to the spigot hole 320 so that the guide body 600 closely disposed on the inner surface of the side adapter 300 does not block the spigot hole 320.

Meanwhile, when a filter 530 that filters out particles exceeding a certain size is installed in the venting hole 520 of the busbar 500, the guide body 600 may be provided with a storage space 630 formed in the inlet region of the filter 530 in response. The storage space 630 is a space in which the gas and coolant stay for a while just before being discharged, so that sufficient cooling can occur once again between the gas and coolant before being discharged through the filter 530 and the venting hole 520, and serves to alleviate congestion at external discharge.

Here, it may be desirable for the storage space 630 to be disposed downstream of the spigot hole 320 so as not to impede the flow of coolant and/or water vapor discharged from the spigot hole 320.

### [REFERENCE NUMERALS]

| | | | |
|---|---|---|---|
| 10: | SECONDARY BATTERY | 100: | HOUSING |
| 102: | HOLLOW PORTION | 104: | ENTRANCE/EXIT |
| 110: | MAIN HOUSING | 120: | BOTTOM PLATE |
| 200: | BATTERY CELL | 210: | ELECTRODE LEAD |
| 300: | SIDE ADAPTER | 310: | GROOVE |
| 320: | SPIGOT HOLE | 330: | STOPPER |
| 400: | SIDE CAP | 410: | INCISION |
| 500: | BUSBAR | 510: | ELECTRODE TERMINAL |
| 520: | VENTING HOLE | 530: | FILTER |
| 600: | GUIDE BODY | 610: | GUIDE PLATE |
| 620: | THROUGH HOLE | 630: | STORAGE SPACE |
| W: | COOLANT | | |

## Claims

1. A secondary battery (10), comprising:
a metal housing (100);
at least one battery cell (200) within the housing (100); and
a coolant (W),
wherein the housing (100) comprises an inner surface facing the at least one battery cell (200) and an outer surface spaced apart from the inner surface, and
wherein the coolant (W) is stored in a plurality of hollow portions (102) formed between the inner surface and the outer surface,
wherein each hollow portion (102) is provided with a pair of openings (104) on both sides of the housing (100),
**characterized in that** the secondary battery (10) further comprises a pair of side adapters (300) on both sides of the housing (100) that seal the pair of openings (104) of each hollow portion (102), each of the side adapters (300) including a groove (310) for coupling to the inner and outer surfaces of the housing (100), the openings (104) of the hollow portions (102) in one side of the housing (100) communicating with each other within the groove (310).

2. The secondary battery (10) of claim 1, wherein:
each the side adapters (300) includes a spigot hole (320) exposing part of the openings (104) of the hollow portions (102) in one side of the housing (100) to allow for spigotting from the outside, and
the spigot hole (320) is sealed by a stopper (330).

3. The secondary battery (10) of claim 2, wherein:
the stopper (330) is made of a material having a melting point lower than that of a material of the housing (100).

4. The secondary battery (10) of claim 3, wherein:
the spigot hole (320) is disposed in the upper part of the housing (100).

5. The secondary battery (10) of claim 3, further comprising:
a side cap (400) coupled to the side adapter (300), and forming an interior space in which an electrode lead (210) of the at least one battery cell (200) is located; and
a busbar (500) disposed inside the side cap (400) and electrically connected to the electrode lead (210), a part of which is exposed through an opening (410) in the side cap (400) forming an electrode terminal (510).

6. The secondary battery (10) of claim 5, wherein the busbar (500) comprises a venting hole (520) formed on the electrode terminal (510), and
wherein, when the stopper (330) melts, the coolant (W) and/or water vapor stored in the hollow portion (102) of the housing (100) passes through the spigot hole (320) and is discharged to the venting hole (520).

7. The secondary battery (10) of claim 6, wherein:
a filter (530) is installed in the venting hole (520) to filter out particles exceeding a pre-determined size.

8. The secondary battery (10) of claim 6, further comprising:
a guide body (600) disposed on an interior of the side cap (400) to face the busbar (500),
wherein the guide body (600) directs the flow of gases generated by the at least one battery cell (200), the coolant (W) and/or water vapor discharged through the spigot hole (320) to the venting hole (520).

9. The secondary battery (10) of claim 8, wherein:
the guide body (600) comprises a plurality of guide plates (610) that divide the flow of gases generated in the at least one battery cell (200), coolant (W) and/or water vapor discharged through the spigot hole (320) into a plurality of branches.

10. The secondary battery (10) of claim 8, wherein:
the guide body (600) is disposed closely against the inner surface of the side adapter (300), and is provided with a through hole (620) corresponding to the spigot hole (320) of the side adapter (300).

11. The secondary battery (10) of claim 8, wherein:
a filter (530) is installed in the venting hole (520) to filter out particles exceeding a pre-determined size, and
the guide body (600) comprises a storage space (630) formed in an inlet region of the filter (530).

12. The secondary battery (10) of claim 11, wherein:
the storage space (630) is disposed downstream of the spigot hole (320).

## Patentansprüche

1. Sekundärbatterie (10), umfassend:
ein Metallgehäuse (100);
wenigstens eine Batteriezelle (200) innerhalb des Gehäuses (100); und
ein Kühlmittel (W),
wobei das Gehäuse (100) eine innere Fläche, welche der wenigstens einen Batteriezelle (200) zugewandt ist, und eine äußere Fläche umfasst, welche von der inneren Fläche beabstandet ist, und
wobei das Kühlmittel (W) in einer Mehrzahl von hohlen Abschnitten (102) gespeichert ist, welche zwischen der inneren Fläche und der äußeren Fläche gebildet sind,
wobei jeder hohle Abschnitt (102) an beiden Seiten des Gehäuses (100) mit einem Paar von Öffnungen (104) bereitgestellt ist,
**dadurch gekennzeichnet, dass** die Sekundärbatterie (10) an beiden Seiten des Gehäuses (100) ferner ein Paar von seitlichen Adaptern (300) umfasst, welche das Paar von Öffnungen (104) jedes hohlen Abschnitts (102) abdichten, wobei jeder der seitlichen Adapter (300) eine Nut (310) zum Koppeln mit der inneren und der äußeren Fläche des Gehäuses (100) umfasst, wobei die Öffnungen (104) der hohlen Abschnitte (102) in einer Seite des Gehäuses (100) innerhalb der Nut (310) miteinander in Verbindung stehen.

2. Sekundärbatterie (10) nach Anspruch 1, wobei:
jeder der seitlichen Adapter (300) ein Zapfenloch (320) umfasst, welches in einer Seite des Gehäuses (100) einen Teil der Öffnungen (104) der hohlen Abschnitte (102) freilegt, um ein Einsetzen von dem Äußeren zu ermöglichen, und
das Zapfenloch (320) durch einen Stopfen (330) abgedichtet ist.

3. Sekundärbatterie (10) nach Anspruch 2, wobei:
der Stopfen (330) aus einem Material hergestellt ist, welches einen Schmelzpunkt aufweist, welcher niedriger ist als der eines Materials des Gehäuses (100).

4. Sekundärbatterie (10) nach Anspruch 3, wobei:
das Zapfenloch (320) in dem oberen Teil des Gehäuses (100) angeordnet ist.

5. Sekundärbatterie (10) nach Anspruch 3, ferner umfassend:
einen seitlichen Deckel (400), welcher mit einem seitlichen Adapter (300) gekoppelt ist und einen inneren Raum bildet, in welchem sich eine Elektrodenleitung (210) der wenigstens einen Batteriezelle (200) befindet; und
eine Sammelschiene (500), welche innerhalb des seitlichen Deckels (400) angeordnet ist und elektrisch mit der Elektrodenleitung (210) verbunden ist, von welcher ein Teil durch eine Öffnung (410) in dem seitlichen Deckel (400) freigelegt ist, der einen Elektrodenanschluss (510) bildet.

6. Sekundärbatterie (10) nach Anspruch 5, wobei die Sammelschiene (500) ein Entlüftungsloch (520) umfasst, welches an dem Elektrodenanschluss (510) gebildet ist, und
wobei, wenn der Stopfen (330) schmilzt, das Kühlmittel (W) und/oder Wasserdampf, welcher in dem hohlen Abschnitt (102) des Gehäuses (100) gespeichert ist, durch das Zapfenloch (320) passiert und zu dem Entlüftungsloch (520) abgegeben wird.

7. Sekundärbatterie (10) nach Anspruch 6, wobei:
ein Filter (530) in dem Entlüftungsloch (520) installiert ist, um Partikel herauszufiltern, welche eine vorbestimmte Größe überschreiten.

8. Sekundärbatterie (10) nach Anspruch 6, ferner umfassend:
einen Führungskörper (600), welcher an einem Inneren des seitlichen Deckels (400) angeordnet ist, um der Sammelschiene (500) zugewandt zu sein,
wobei der Führungskörper (600) die Strömung von durch die wenigstens eine Batteriezelle (200) erzeugten Gasen, des Kühlmittels (W) und/oder des Wasserdampfs, welche durch das Zapfenloch (320) abgegeben werden, zu dem Entlüftungsloch (520) leitet.

9. Sekundärbatterie (10) nach Anspruch 8, wobei:
der Führungskörper (600) eine Mehrzahl von Führungsplatten (610) umfasst, welche die Strömung von in der wenigstens einen Batteriezelle (200) erzeugten Gasen, des Kühlmittels (W) und/oder des Wasserdampfs, welche durch das Zapfenloch (320) abgegeben werden, in eine Mehrzahl von Zweigen aufteilt.

10. Sekundärbatterie (10) nach Anspruch 8, wobei:
der Führungskörper (600) eng an der inneren Fläche des seitlichen Adapters (300) angeordnet ist und mit einem Durchgangsloch (620) bereitgestellt ist, welches dem Zapfenloch (320) des seitlichen Adapters (300) entspricht.

11. Sekundärbatterie (10) nach Anspruch 8, wobei:
ein Filter (530) in dem Entlüftungsloch (520) installiert ist, um Partikel herauszufiltern, welche eine vorbestimmte Größe überschreiten, und
der Führungskörper (600) einen Speicherraum (630) umfasst, welcher in einem Einlassbereich des Filters (530) gebildet ist.

12. Sekundärbatterie (10) nach Anspruch 11, wobei:
der Speicherraum (630) stromabwärts des Zapfenlochs (320) angeordnet ist.

## Revendications

1. Batterie secondaire (10), comprenant :
un boîtier métallique (100) ;
au moins un élément de batterie (200) à l'intérieur du boîtier (100) ; et
un liquide de refroidissement (W),
dans laquelle le boîtier (100) comprend une surface interne faisant face audit au moins un élément de batterie (200) et une surface externe espacée de la surface interne, et
dans laquelle le liquide de refroidissement (W) est stocké dans une pluralité de parties creuses (102) formées entre la surface interne et la surface externe,
dans laquelle chaque partie creuse (102) est pourvue d'une paire d'ouvertures (104) des deux côtés du boîtier (100),
**caractérisée en ce que** la batterie secondaire (10) comprend en outre une paire d'adaptateurs latéraux (300) des deux côtés du boîtier (100) qui scellent la paire d'ouvertures (104) de chaque partie creuse (102), chacun des adaptateurs latéraux (300) comportant une rainure (310) pour un couplage aux surfaces interne et externe du boîtier (100), les ouvertures (104) des parties creuses (102) sur un côté du boîtier (100) communiquant entre elles à l'intérieur de la rainure (310).

2. Batterie secondaire (10) selon la revendication 1, dans laquelle :
chacun des adaptateurs latéraux (300) comporte un trou d'emboîtement (320) exposant une partie des ouvertures (104) des parties creuses (102) dans un côté du boîtier (100) pour permettre l'emboîtement depuis l'extérieur, et
le trou d'emboîtement (320) est scellé par un bouchon (330).

3. Batterie secondaire (10) selon la revendication 2, dans laquelle :
le bouchon (330) est constitué d'un matériau ayant un point de fusion inférieur à celui d'un matériau du boîtier (100).

4. Batterie secondaire (10) selon la revendication 3, dans laquelle :
le trou d'emboîtement (320) est disposé dans la partie supérieure du boîtier (100).

5. Batterie secondaire (10) selon la revendication 3, comprenant en outre :
un capuchon latéral (400) couplé à l'adaptateur latéral (300), et formant un espace intérieur dans lequel se trouve un fil d'électrode (210) dudit au moins un élément de batterie (200) ; et
une barre omnibus (500) disposée à l'intérieur du capuchon latéral (400) et connectée électriquement au fil d'électrode (210), dont une partie est exposée à travers une ouverture (410) dans le capuchon latéral (400) formant une borne d'électrode (510).

6. Batterie secondaire (10) selon la revendication 5, dans laquelle la barre omnibus (500) comprend un trou d'évent (520) formé sur la borne d'électrode (510), et
dans laquelle, lorsque le bouchon (330) fond, le liquide de refroidissement (W) et/ou de la vapeur d'eau stockés dans la partie creuse (102) du boîtier (100) passent à travers le trou d'emboîtement (320) et sont évacués vers le trou d'évent (520).

7. Batterie secondaire (10) selon la revendication 6, dans laquelle :
un filtre (530) est installé dans le trou d'évent (520) pour filtrer des particules dépassant une taille prédéterminée.

8. Batterie secondaire (10) selon la revendication 6, comprenant en outre :
un corps de guidage (600) disposé sur un intérieur du capuchon latéral (400) pour faire face à la barre omnibus (500),
dans laquelle le corps de guidage (600) dirige le flux de gaz générés par ledit au moins un élément de batterie (200), le liquide de refroidissement (W) et/ou la vapeur d'eau évacués à travers le trou d'emboîtement (320) vers le trou d'évent (520).

9. Batterie secondaire (10) selon la revendication 8, dans laquelle :
le corps de guidage (600) comprend une pluralité de plaques de guidage (610) qui divisent en une pluralité de dérivations le flux de gaz générés dans ledit au moins un élément de batterie (200), le liquide de refroidissement (W) et/ou la vapeur d'eau évacués à travers le trou d'emboîtement (320).

10. Batterie secondaire (10) selon la revendication 8, dans laquelle :
le corps de guidage (600) est disposé étroitement contre la surface interne de l'adaptateur latéral (300), et est pourvu d'un trou traversant (620) correspondant au trou d'emboîtement (320) de l'adaptateur latéral (300).

11. Batterie secondaire (10) selon la revendication 8, dans laquelle :
un filtre (530) est installé dans le trou d'évent (520) pour filtrer des particules dépassant une taille prédéterminée, et
le corps de guidage (600) comprend un espace de stockage (630) formé dans une région d'entrée du filtre (530).

12. Batterie secondaire (10) selon la revendication 11, dans laquelle :
l'espace de stockage (630) est disposé en aval du trou d'emboîtement (320).
